# EUROPÄISCHE PATENTSCHRIFT

(11) **EP 1 264 653 B1**
(45) Veröffentlichungstag und Bekanntmachung des Hinweises auf die Patenterteilung: **11.03.2009**
(21) Anmeldenummer: 02005675.0
(22) Anmeldetag: 12.03.2002
(51) Int. Cl.: B23B 29/034

(54) **Spindelanordnung für eine Werkzeugmaschine**
Spindle
Broche

(30) Priorität: 01.06.2001 DE 10126969
(43) Veröffentlichungstag der Anmeldung: 11.12.2002
(73) Patentinhaber: Ex-Cell-O GmbH, 73054 Eislingen/Fils (DE)
(72) Erfinder: Feinauer, Achim, Dr., 73033 Göppingen (DE); Rieker, Hartmut, 73084 Salach (DE)
(74) Vertreter: Regelmann, Thomas

(56) Entgegenhaltungen:
- EP-A- 0 189 697
- WO-A-02/43906
- DE-A- 19 712 238
- DE-U- 29 917 510
- US-A- 4 553 886
- US-A- 4 573 379
- US-A- 4 617 846

## Beschreibung

Die Erfindung betrifft eine Spindelanordnung für eine Werkzeugmaschine gemäß dem Oberbegriff des Patentanspruchs 1.

Eine derartige Spindelanordnung ist aus der deutschen Patentanmeldung DE 197 122 38 der Anmelderin bekannt. Bei dieser Lösung ist eine Innenspindel in einer Außenspindel gelagert, wobei beiden Spindeln ein eigener Antrieb zugeordnet ist. Beide Antriebe lassen sich synchron miteinander oder mit einer Drehzahldifferenz antreiben. Bei einer Variante dieser bekannten Lösung ist die Spindelanordnung als Kompensationsspindel ausgeführt, wobei die Innenspindel exzentrisch in der Außenspindel gelagert ist. Durch Einstellung einer Drehzahldifferenz zwischen exzentrisch gelagerter Innenspindel und der Außenspindel kann dann eine Radialverstellung der Werkzeugschneiden erfolgen.

In der gattungsgemäßen Patentanmeldung ist eine alternative Lösung beschrieben, gemäß der die Innenspindel koaxial zur Außenspindel gelagert ist und an ihrem Außenumfang mit einer Steuerfläche versehen ist, gegen die ein Radialstift vorgespannt ist. Durch Verdrehung der Innenspindel gegenüber der Außenspindel kann dieser Stift in Radialrichtung bewegt werden. Diese Radialverschiebung wird auf einen Biegeklemmhalter für eine oder mehrere Werkzeugschneiden übertragen, so daß auch bei dieser Lösung mit äußerst einfachem vorrichtungstechnischem Aufwand eine exakte Radialverstellung während der Bearbeitung ermöglicht ist.

Trotz des vergleichsweise einfachen Aufbaus der vorbeschriebenen Lösungen zeigte es sich bei der Realisierung dieses Konzepts, daß insbesondere im Antriebsbereich noch ein erheblicher Aufwand erforderlich ist, um den Anforderungen, wie bspw. schnelle Einstellung von Drehzahländerungen und hoher Schnittgeschwindigkeiten auch bei schwer zu zerspanenden Materialien zu genügen.

Aus der US 4,573,379 ist eine Maschine mit einer drehbaren Spindel für ein Werkzeug oder Werkstück bekannt und eine Vorrichtung mit einem Wälzkörper-Schneckengetriebemechanismus, welcher koaxial an der Spindel angeordnet ist. Über diesen Mechanismus ist ein Teil längs der Spindel axial beweglich.

Aus der DE 299 17 510 U1 ist eine Spindeleinheit für eine Werkzeugmaschine bekannt, welche in einem motorseitigen Motorspindelgehäuse einen elektrisch angetriebenen Antriebsmotor für eine Motorspindel und eine Hauptspindel mit einem rotierenden Bearbeitungswerkzeug aufweist. Es ist ein Zustellsystem und ein Steigenträger vorgesehen, der über eine Stelleinrichtung quer zur Achse des Werkzeugs verstellbar gelagert ist. Die Schnittgeschwindigkeit ist primär durch die Drehung des Werkzeugs erzielt.

Demgegenüber liegt der Erfindung die Aufgabe zugrunde, eine Spindelanordnung zu schaffen, die mit minimalem vorrichtungstechnischem Aufwand die schnell Einstellung von Drehzahländerungen, und die Realisierung hoher Zerspanungsleistungen ermöglicht.

Diese Aufgabe wird durch eine Spindelanordnung mit den Merkmalen des Patentanspruchs 1 gelöst.

Erfindungsgemäß hat die Spindelanordnung eine Kupplung, über die beide Spindeln miteinander drehfest koppelbar sind, so daß die Antriebsmomente beider Antriebsmotoren genutzt werden können, um hohe Zerspanungsleistungen zu ermöglichen. Erfindungsgemäß wird es bevorzugt, wenn der die Schnittkraft übertragenden Spindel, bspw. der Außenspindel ein vergleichsweise großer Motor zugeordnet ist, während der die Schneidenverstellung (Kompensation), vornehmende Spindel relativ klein gehalten werden kann, so daß die Spindel sehr kompakt aufgebaut ist. Bei dieser Variante erfolgt das Beschleunigen und Abbremsen der Innenspindel über den starken Antrieb der Außenspindel, während der kleinere Antrieb der Innenspindel nur die Schneidenverstellung übernimmt.

Da bei der erfindungsgemäßen Lösung ein Motor kleiner als bei herkömmlichen Konstruktionen ausgeführt werden kann, dürfte die Spindelanordnung auch kostengünstiger herstellbar sein.

Vorzugsweise werden die Antriebsmotoren der Spindeln als Einbaumotoren ausgeführt, die koaxial zu den Spindeln im Spindelgehäuse angeordnet sind.

Die Kupplung kann als kraft- oder formschlüssige Kupplung ausgeführt sein. Eine besonders einfach aufgebaute und robuste Variante dürfte die Ausbildung als Zahnkupplung, bspw. etwa in Form einer Hirth-Kupplung sein, die das Übertragen hoher Drehmomente ermöglicht. Bevorzugt werden jedoch Reibkupplungen.

Bei Lösungen, bei denen die Innenspindel koaxial zur Außenspindel gelagert ist, wird ein Werkzeug vorzugsweise in der Außenspindel gespannt, deren Antriebsmotor somit größer als der Zustellmotor der Innenspindel ist. Dabei kann eine Zugstange zum Betätigen von Spannzangen der Werkzeugaufnahme von der Innenspindel durchsetzt sein.

Für den Fall, daß die Innenspindel koaxial zur Außenspindel gelagert ist und eine Kompensation der Werkzeugschneiden gewünscht ist, wird die Spindelanordnung mit einem sog. Kompensationswerkzeug betrieben, in das die Einrichtung zur Schneidenverstellung integriert sind. In diesem Fall wird die Drehbewegung der Innenspindel über eine geeignete form- oder kraftschlüssige Kupplung auf eine Betätigungswelle des Werkzeugs übertragen. Diese Betätigungswelle ist im Fall eines Kompensationswerkzeugs eine Exzenterwelle. Selbstverständlich können über diese Betätigungswelle auch andere Funktionen des Werkstückes, bspw. eine Wuchteinrichtung, oder ein Getriebe zur Anpassung der Werkzeugdrehzahl oder Meßköpfe etc. gesteuert werden.

Um Beschädigungen der Spindelanordnung zu vermeiden, kann die mit der Betätigungswelle zu koppelnde Innenspindel in Axialrichtung federnd im Spindelgehäuse aufgenommen sein, so daß im Fall einer fehlerhaften Ankopplung und einer daraus resultierenden axialen Verschiebung der Innenspindel diese erfaßt und ein Fehlersignal an die Maschinensteuerung abgegeben werden kann.

Die erfindungsgemäße Spindelanordnung kann auch mit einer exzentrisch gelagerten Innenspindel ausgeführt sein. In diesem Fall wird das Werkzeug in der Innenspindel gespannt, so daß der Antriebsmotor für die Innenspindel größer als beim vorbeschriebenen Ausführungsbeispiel ausgeführt wird. In diesem Fall läßt sich eine besonders kompakte Spindelanordnung ausbilden, in dem die Statoren der Antriebe für Außen- und Innenspindel koaxial zueinander angeordnet sind, so daß der Rotor des Antriebsmotors der Innenspindel exzentrisch im zugeordneten Stator läuft.

Der Aufwand zur Ansteuerung der Spindelanordnung ist besonders gering, wenn eine Werkzeugspannvorrichtung und die Kupplung über eine gemeinsame Betätigungseinrichtung aussteuerbar sind.

Als Betätigungseinrichtung wird bei einem bevorzugten Ausführungsbeispiel ein hydraulisch betätigter Kolben verwendet, über den einerseits die Kupplung zur Verbindung der Innen- und Aussenspindel und andererseits die Werkzeugspannvorrichtung betätigbar ist.

Bei einem besonders einfach ausgeführten Ausführungsbeispiel ist dieser Kolben als Hohlkolben ausgeführt, der über eine Schiebehülse auf einer der Spindeln, vorzugsweise der Innenspindel axialverschiebbar und drehfest gelagert ist. Über diese Schiebehülse kann eine drehfeste Verbindung mit der anderen Spindel - im vorliegenden Fall der Aussenspindel - hergestellt werden, während über den Kolben oder die Schiebehülse bei einer Axialverschiebung auch die Werkzeugspannvorrichtung durch Axialverschiebung betätigt wird.

Bei einem vorteilhaften Ausführungsbeispiel kann der Kolben auch zur Einstellung einer Lagervorspannung verwendet werden.

Bei einem besonders bevorzugten Ausführungsbeispiel ist der Kolben über Lager auf der Schiebehülse und damit der Innenspindel abgestützt. Diese Lager bilden ein Loslager der Spindelanordnung. Erfindungsgemäß kann die Lagervorspannung durch Druckbeaufschlagung des Kolbens variiert werden.

Wie vorstehend erwähnt, können durch die Axialposition des Kolbens die Betriebszustände Kuppeln, Entkuppeln, Spannen, Entspannen gesteuert werden. Die unterschiedlichen Axialpositionen lassen sich bei einer vorteilhaften Variante über eine Steuereinrichtung steuern. Diese Steuereinrichtung kann beispielsweise ein Steuerstück haben, das in einer Steuernut des Kolbens geführt ist und das in Überdeckung mit mehreren Anschlagflächen der Nut bringbar ist. Die Verschiebung des Steuerstücks zur Aktivierung der unterschiedlichen Anschläge kann beispielsweise über einen Hubmagneten oder eine andere geeignete Stelleinrichtung erfolgen.

Bei einem weiteren bevorzugten Ausführungsbeispiel der Erfindung ist an dem von der Kupplung entfernten Endabschnitt des Zylindergehäuses ein Druckring vorgesehen, der zum Kuppeln in Reibschluss mit der Schiebehülse bringbar ist. Das übertragbare Kupplungsmoment wird dabei über eine federvorgespannte Federplatte bestimmt. D. h., die Verbindung zwischen der Innenspindel und der Aussenspindel erfolgt einerseits über die Kupplung und andererseits über den Druckring.

Es wird bevorzugt, wenn das den Kolben aufnehmende Zylindergehäuse selbst axialverschiebbar im Spindelgehäuse geführt ist, so dass der vorbeschrieben Druckring auch durch Axialverschiebung des Zylindergehäuses in seine Kupplungsposition bringbar ist.

Bei nicht orientierten Werkzeugen werden diese mit einer Referenziereinrichtung ausgeführt, über die durch geeignete Ansteuerung von Innen- und Außenspindel seine Nulllagenpositionierung der Werkzeugschneide durchführbar ist.

Diese Referenziereinrichtung wird vorzugsweise als Drehanschlag mit einem Anschlagkörper ausgeführt, der drehfest im Werkzeugkopf oder in der Betätigungswelle aufgenommen ist und der mit einem Endabschnitt in eine Umfangsnut der Betätigungswelle bzw. des Werkzeugkopfs eintaucht, so dass der Anschlagkörper bei Einstellung der Drehzahldifferenz in eine Anschlagposition gebracht werden kann, die die Nullage der Werkzeugschneide kennzeichnet.

Besonders vorteilhaft ist es, wenn die Umfangsnut den Aussenumfang der Betätigungswelle nicht vollständig umgreift, so dass der Anschlagkörper in der Nulllage auf eine Stirnfläche der Umfangsnut aufläuft.

Alternativ kann die Referenziereinrichtung auch einen Axialanschlag aufweisen, auf den ein axial verschiebbarer Teil des Werkzeugs zur Einstellung der Nullposition aufläuft. Dieser axial verschiebbare Teil kann beispielsweise durch eine Mutter einer Gewinde- oder Kugelumlaufspindel gebildet sein, die mit der Betätigungswelle zusammenwirkt oder als Betätigungswelle ausgebildet ist, wobei die axialverschiebbare Mutter auf einen Axialanschlag aufläuft.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. es zeigen:
Figur 1 eine schematische Schnittdarstellung einer erfindungsgemäßen Spindelanordnung mit koaxialer Außenund Innenspindel;
Figur 2 eine Kupplung für die Spindelanordnung aus Figur 1;
Figur 3 eine Spindelanordnung mit koaxialer Innenund Außenspindel, in die alternativ ein Standardwerkzeug und ein Kompensationswerkzeug eingespannt ist;
Figur 4 eine Variante der Spindelanordnung aus Figur 3;
Figur 5 Werkzeugkonzepte, die bei einer erfindungsgemäßen Spindelanordnung einsetzbar sind;
Figur 6 ein Werkzeug mit integrierter Wuchteinrichtung;
Figur 7 ein Werkzeug mit integriertem Getriebe zur Änderung der Werkzeugdrehzahl;
Figur 8 ein Werkzeug mit Drehanschlag zur Nulllagenjustierung;
Figur 9 ein weiteres Ausführungsbeispiel einer Spindelanordnung mit exzentrischer Innenspindel und
Figur 10 eine Wuchteinrichtung für die Spindelanordnung aus Figur 9;
Figur 11 eine werkzeugseitige Wuchteinrichtung,
Figur 12 eine Spindelanordnung, bei der eine Kupplung und eine Werkzeugspannvorrichtung gemeinsam betätigbar sind und
Figur 13 die Spindelanordnung aus Figur 12 bei entspanntem Werkzeug.

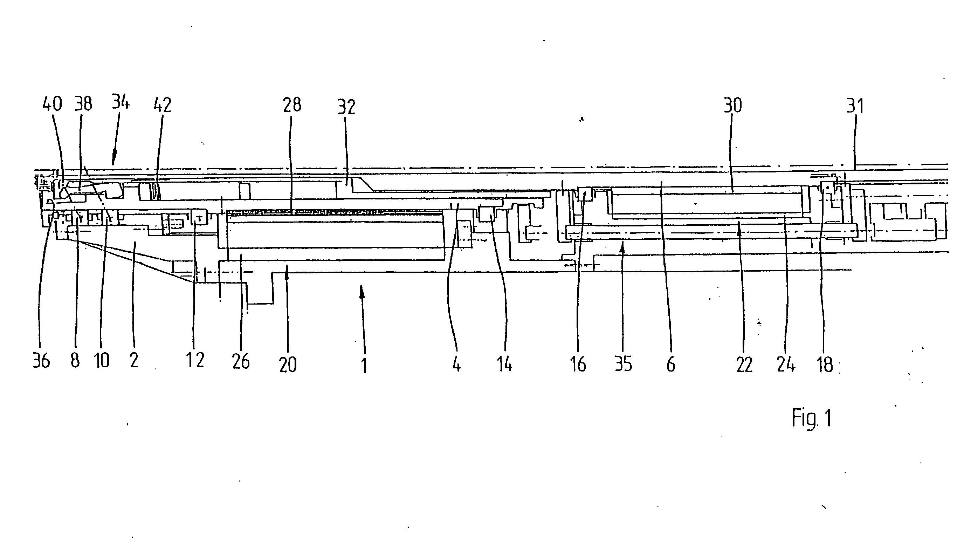

In Figur 1 ist ein erstes Ausführungsbeispiel einer erfindungsgemäßen Spindelanordnung 1, auch Kompensationsspindel genannt, dargestellt. In einem Spindelgehäuse 2 sind eine Außenspindel 4 und eine koaxial zu dieser angeordnete Innenspindel 6 gelagert. In dem Spindelgehäuse 2 sind Wälzlager, bspw. Schrägkugellager 8, 10, 12 und 14 zur Lagerung der Außenspindel 4 abgestützt. Die Innenspindel 6 durchsetzt die Außenspindel 4 und ist über mehrere Wälzlager 16, 18 in der Außenspindel bzw. im Spindelgehäuse geführt. Der Antrieb der Spindeln 4, 6 erfolgt über als Einbaumotoren ausgeführte Antriebsmotoren 20 bzw. 22, deren Statoren 24, 26 gehäusefest aufgenommen sind, während die Rotoren 28, 30 auf der Außenspindel 4 bzw. der Innenspindel 6 gelagert sind.

Bei dem gezeigten Ausführungsbeispiel wird die Innenspindel von einer Axialbohrung 31 durchsetzt, die zur Zuoder Abführung von Kühl-/Schmiermittel, Meßluft, Druckluft etc. dient.

Der sich an die beiden Wälzlager 16, 18 nach links anschließende Teil der Innenspindel 6 durchsetzt eine hohle Zugstange 32 einer Werkzeugspannvorrichtung 34 gelagert. Die Zugstange 32 läßt sich mittels eines Schiebemechanismus 36 zum Spannen eines Werkzeuges in Axialrichtung verschieben. Die Innenspindel 6 könnte auch über ein Loslager in der Zugstange 32 gelagert sein, das die Axialverschiebung während des Entspannens mitmacht. Beim dargestellten Ausführungsbeispiel ist die Werkzeugspannvorrichtung 34 vorzugsweise als Steilkegel-Spannvorrichtung ausgeführt, in deren Kegelaufnahme 36 der Werkzeughalter eingesetzt wird. Die Werkzeugspannvorrichtung 34 hat eine Spannzange 38, die durch an der Zugstange 32 befestigte Spannelemente 40 zum Spannen des Werkzeuges in ihre Spreitzstellung bringbar sind. Beim Verschieben der Zugstange 32 nach links (Figur 1) wirken die Spannelemente 40 als Auswerfer zum Lösen des Werkzeuges. Üblicherweise ist dem in die Kegelaufnahme 36 eingesetzten Werkzeughalter ein Kühlmittelröhrchen ausgebildet, so daß Kühlmittel über die Axialbohrung 31 und das Kühlmittelröhrchen in den Verspanungsbereich geführt werden kann. Die Zugstange 32 ist durch Spannfedern 42 in ihre Spannposition vorgespannt.

In die vorbeschriebene Werkzeugaufnahme lassen sich Standardwerkzeuge mit Norm-HSK-Kühlmittelröhrchen oder aber auch Kompensationswerkzeuge oder sonstige Werkzeuge mit Sonderfunktionen einsetzen, über die bspw. ein Radialverstellung der Werkzeugschneide während der Zerspanung möglich ist.

Bei dem vorbeschriebenen Ausführungsbeispiel ist die Werkzeugspannvorrichtung 34 in der Außenspindel 4 aufgenommen, so daß die Schnittkraft von dieser Spindel aufgebracht werden muß. Der Antriebsmotor 20 der Außenspindel 4 ist bei dem gezeigten Ausführungsbeispiel mit größerer Leistung als der Antriebsmotor 22 der Innenspindel 6 ausgeführt, da über diesen lediglich die Sonderfunktionen, wie bspw. Schneidenverstellung durchgeführt werden müssen, für die wesentlich weniger Drehmoment als für die Übertragung der Schnittkraft aufgebracht werden muß. Beim gezeigten Ausführungsbeispiel sind die Antriebsmotoren 20, 22 im Axialabstand zueinander angeordnet. Alternativ könnten die Motoren jedoch auch ineinander liegend angeordnet sein.

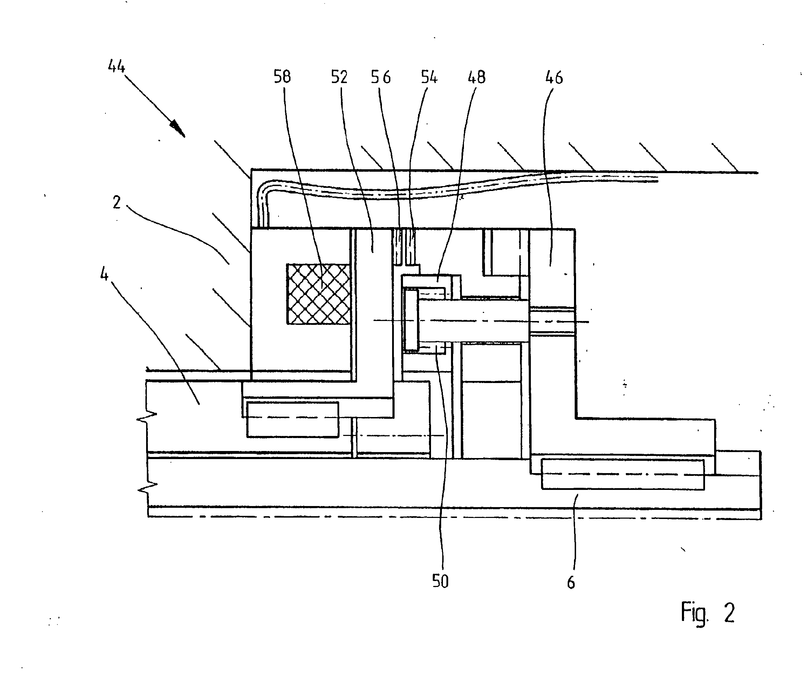

Erfindungsgemäß lassen sich die Innenspindel 6 und die Außenspindel 4 über eine Kupplung 44 drehfest miteinander verbinden, wie sie bspw. in Figur 2 dargestellt ist. Es handelt sich um eine handelsübliche elektromagnetische Zahnkupplung, so daß hier lediglich das Grundprinzip beschrieben werden soll. Selbstverständlich sind auch andere Konstruktionen einsetzbar. Wesentlich ist, dass die Funktion der Kupplung bei den Antriebsmomenten und den hohen Drehzahlen (12 000 U/min) gewährleistet ist. Gemäß Figur 2 ist an der Innenspindel 6 ein Kupplungsflansch 46 befestigt, an dem ein in Axialrichtung verschiebbarer Kupplungsring 48 gelagert ist. Dieser bewegbare Kupplungsring 48 ist über Spannfedern 50 in eine Position vorgespannt, in der die Kupplung außer Eingriff ist. An der Außenspindel 4 ist ein in Axialrichtung feststehender Kupplungsring 52 gelagert. Beide Kupplungsringe 48, 52 haben jeweils eine Stirnverzahnung 54 bzw. 56, die bei eingerückter Kupplung 44 in Eingriff miteinander stehen. Bei dem dargestellten Ausführungsbeispiel erfolgt die Betätigung, d.h. das Schließen der Kupplung 44 über einen im Spindelgehäuse 2 gelagerten Elektromagneten 58, bei dessen Bestromung der axial bewegliche Kupplungsring 48 nach links in die Eingriffsposition verschoben wird, so daß die Innenspindel 6 drehfest mit der Außenspindel 4 verbunden ist.

Die erfindungsgemäße Kupplung 44 ermöglicht es somit, bspw. bei schwer zu zerspanenden Materialien die beiden Spindeln 4, 6 drehfest miteinander zu verbinden und beide Motoren anzusteuern, so daß ein hohes Drehmoment zum Aufbringen der Schnittkraft zur Verfügung steht. Erfindungsgemäß wird es bevorzugt, wenn derjenige Motor, der keine Schnittkraft übertragen muß, d.h. im vorliegenden Ausführungsbeispiel der Antriebsmotor 22 der Innenspindel 6 mit einer geringeren Leistung als der Antriebsmotor 20 der Außenspindel 4 ausgelegt wird, da dieser die Schnittkraft übertragen muß. Zum Beschleunigen oder Abbremsen der Spindeln 4, 6 wird dann lediglich der Antriebsmotor 20 der Außenspindel 4 angesteuert, so daß die Innenspindel 6 bei eingerückter Kupplung praktisch "mitgeschleppt" wird. Da der lediglich für die Schneidenverstellung oder sonstigen Aufgaben benötigte Antriebsmotor 22 der Innenspindel 6 sehr klein gehalten werden kann, können die Spindeln 4, 6 äußerst kompakt aufgebaut werden.

Wie bereits vorstehend erwähnt, können sowohl Standardwerkzeuge, d.h. Werkzeuge ohne Kompensationseinrichtung, als auch Kompensationswerkzeuge über die gezeigte Werkzeugspannvorrichtung 34 gewechselt werden. Über die Axialbohrung 31 kann die interne Kühl-/Schmiermittelzufuhr für KSS (Emulsion, Öl) oder für Luft ausgeführt werden. Beim Werkzeugwechsel kann Blasluft für die Reinigung der Spindel- und Werkzeugfunktionsflächen bereitgestellt werden. Bei Mindermengen Kühlschmiermittel (MMKS) muss eine separate Bohrung vorgesehen werden.

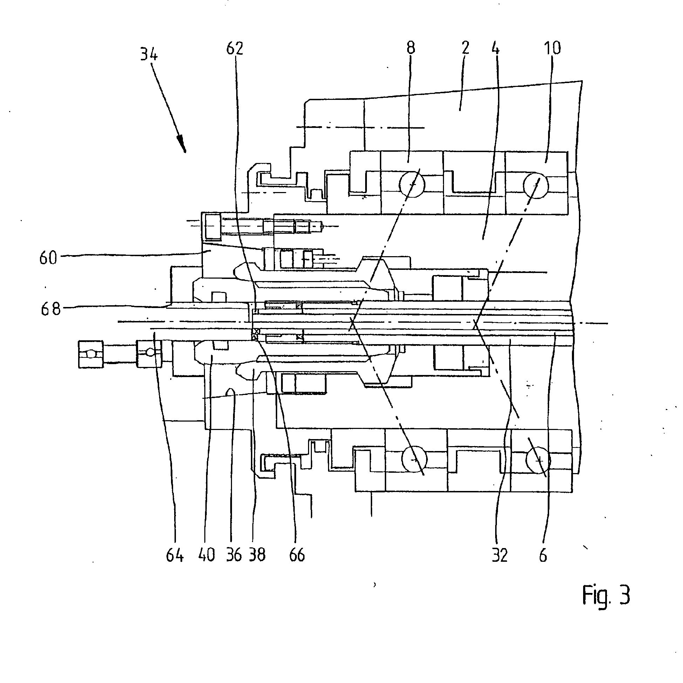

In Figur 3 ist eine Variante der in Figur 1 dargestellten Werkzeugspannvorrichtung 34 dargestellt. Wie beim vorbeschriebenen Ausführungsbeispiel ist die Außenspindel 4 über Schrägkugellager 8, 10 (und weitere nicht dargestellte Kugellager) im Spindelgehäuse 2 gelagert. Die Innenspindel 6 durchsetzt - ähnlich wie beim vorbeschriebenen Ausführungsbeispiel - die Zugstange 32. Auf den in Figur 3 linken Endabschnitt der Zugstange 32 ist das Spannelement 40 zur Betätigung der Spannzange 38 und zum Auswerfen der in die Kegelaufnahme 36 eingesetzten Werkzeugaufnahme 60 aufgeschraubt.

Gemäß Figur 3 steht der Endabschnitt der Innenspindel 6 nach links aus der Zugstange 32 hervor und hat an seinem Umfang eine Vielzahl von Ausnehmungen, durch die eine Verzahnung 62 gebildet ist.

Bei der Verwendung eines Kompensationswerkzeuges (untere Hälfte in Figur 3) hat dieses eine Betätigungswelle 64, die stirnseitig ebenfalls mit einer Verzahnung 66 ausgeführt ist. Beim Einsetzen der Werkzeugaufnahme 60 in die Kegelaufnahme 36 werden die beiden stirnseitigen Verzahnungen 62, 66 in Eingriff gebracht, wodurch die Innenspindel 6 drehfest mit der Betätigungswelle 64 verbunden ist, so daß über diese bspw. die Kompensation der Werkzeugschneiden steuerbar ist.

Die Länge des aus der Zugstange 32 hervorstehenden Endabschnittes der Innenspindel 6 ist so gewählt, daß beim Spannen eines Standardwerkzeuges zwischen einem HSK-Kühlmittelröhrchen 68 und der mit der Verzahnung 62 versehenen Stirnfläche der Innenspindel ein Axialspalt verbleibt, so daß keine Kollision stattfinden kann.

Die Kontrolle des Kupplungsvorganges zwischen dem Kompensationswerkzeug (untere Hälfte in Figur 3) und der Innenspindel 6 kann dadurch erfolgen, daß letztere angefedert in der Außenspindel 4 geführt ist, so daß bei einem fehlerhaften Kupplungsprozeß die Innenspindel 6 durch Auflaufen der Verzahnungen 62, 66 aufeinander nach rechts bewegt wird. Diese Axialverschiebung kann über geeignete Aufnehmer abgefragt und ein entsprechendes Fehlersignal an die Maschinensteuerung abgegeben werden.

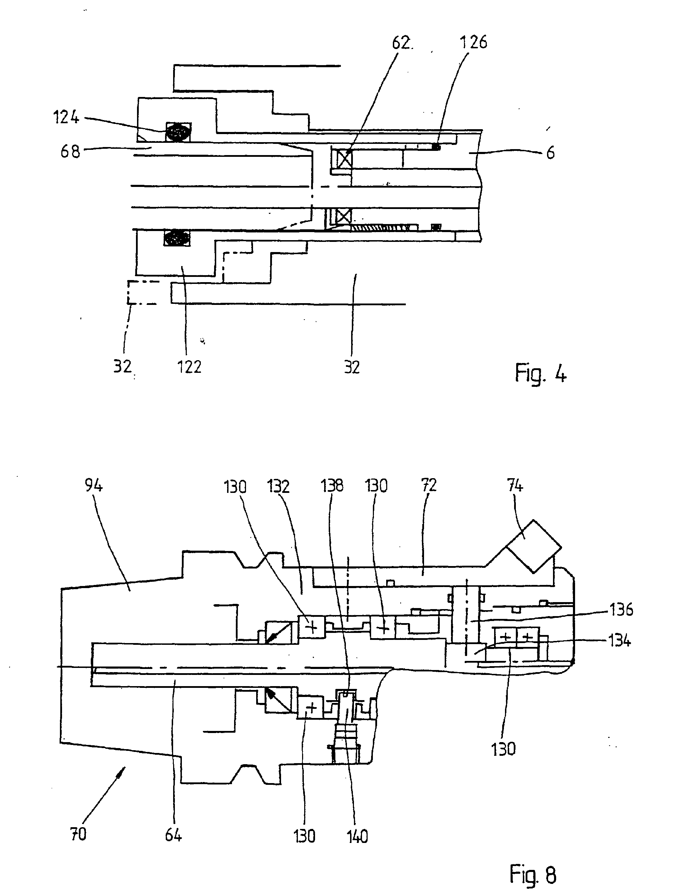

Nachteilig bei der in Figur 3 dargestellten Lösung ist, dass es im Übergangsbereich zwischen dem HSK-Kühlmittelröhrchen und der Innenspindel zu Leckagen kommen kann. In Figur 4 ist ein Ausführungsbeispiel dargestellt, bei dem dieser Nachteil überwunden ist. Bei dieser Lösung ist an dem die Verzahnung 62 tragenden Endabschnitt der Innenspindel 6 drehfest eine Zwischenbuchse 122 ausgebildet, die sich über die Verzahnung 62 hinaus erstreckt und den Aussenumfang des Endabschnittes des benachbarten HSK-Kühlmittelröhrchen dichtend umgreift. Zur besseren Abdichtung ist dabei ein O-Ring 124 in einer Ringnut der Zwischenbuchse 122 aufgenommen. Das Kühlmittelröhrchen 68 dreht sich dabei mit der gleichen Geschwindigkeit wie die Innenspindel 6, so dass auf Verwendung des in Figur 4 oben dargestellten Standard-Werkzeuges die Leckage gegenüber der vorbeschriebenen Lösung sehr gering ist. Die Zugstange 32 umgreift mit ihrem Endabschnitt den Aussenumfang der Zwischenbuchse 122. In der Darstellung gemäß Figur 4 ist der Entspannungshub der Zugstange 32 strichpunktiert angedeutet. D. h, in dieser Hubposition befindet sich eine Ringstirnfläche der Zugstange 32 in Axialrichtung vor (links) der Stirnfläche der Zwischenbuchse 122. Zur Abdichtung der Zwischenbuchse 122 mit Bezug zur Innenspindel 6 sind im Umfangsbereich weitere Dichteinrichtungen 126 vorgesehen. Im Übrigen entspricht das vorbeschriebene Ausführungsbeispiel demjenigen aus Figur 3, so dass weitere Erläuterungen entbehrlich sind.

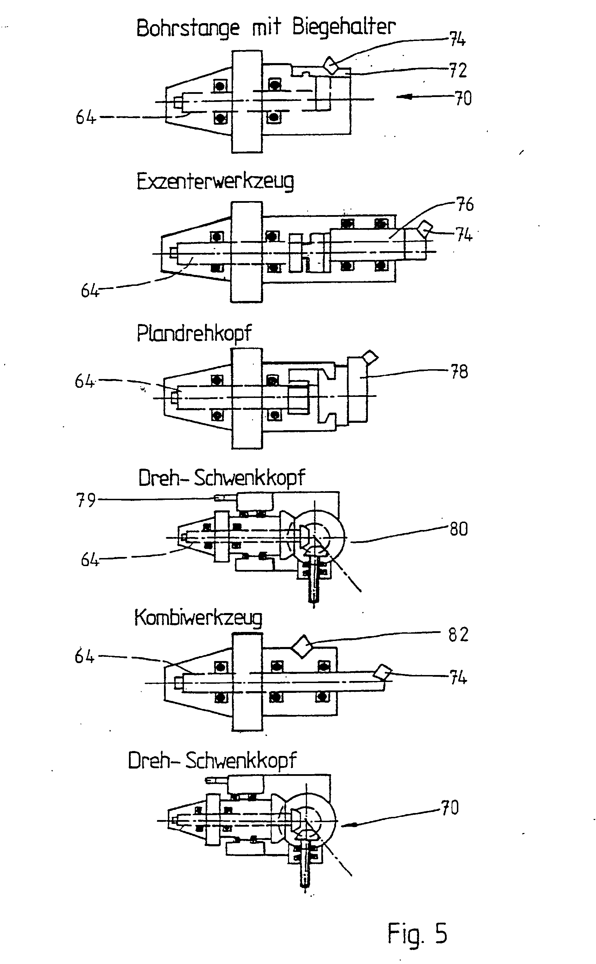

In Figur 5 sind beispielhaft einige Werkzeuge 70 dargestellt, wie sie in die vorbeschriebene Spindelanordnung 1 einsetzbar sind. Bei dem oben dargestellten Ausführungsbeispiel ist das Werkzeug 70 mit einer Bohrstange mit Biegeklemmhalter 72 ausgeführt, wobei die Radialverstellung des Biegeklemmhalters 72 und damit der Werkzeugschneide 74 durch Betätigung der an die Innenspindel 6 angekoppelten Betätigungswelle 64 erfolgt.

Das darunter abgebildete Werkzeug ist als Exzenterwerkzeug ausgeführt, wobei über die Betätigungswelle 64 und eine einen Versatz zulassende Kupplung eine die Werkzeugschneide 74 tragende Exzenterwelle 76 angetrieben wird.

Bei dem darunter dargestellten Ausführungsbeispiel wird das Werkzeug 70 mit einem Plandrehkopf 78 ausgeführt, über das ein Planen, Fasen, Kegel- oder Kugeldrehen ermöglicht ist. Die Verstellung des Plandrehkopfs 78 erfolgt über die Betätigungswelle 64.

Zur Bearbeitung von räumlich angeordneten Bohrungen und zum Kugeldrehen kann das Werkzeug mit einem Dreh-Schwenkkopf 80 ausgeführt werden, wobei ein Mitnehmer 79 als Verdrehsicherung dienen kann.

Das darunter angeordnete Ausführungsbeispiel zeigt ein Kombiwerkzeug, bei dem zwei axial und radial versetzte Werkzeugschneiden 74 vorgesehen sind, die ein Bohren bzw. Ausdrehen mit unterschiedlichen Schnittgeschwindigkeiten ermöglichen. Dabei dreht sich die Werkzeugschneide 82 mit der Drehzahl der Außenspindel, während die Werkzeugschneide 74 über die an die Innenspindel 6 angekoppelte Betätigungswelle 64 angetrieben wird.

Das unterste Symbol steht für einen Dreh-Schwenkkopf zum Gesenkfräsen.

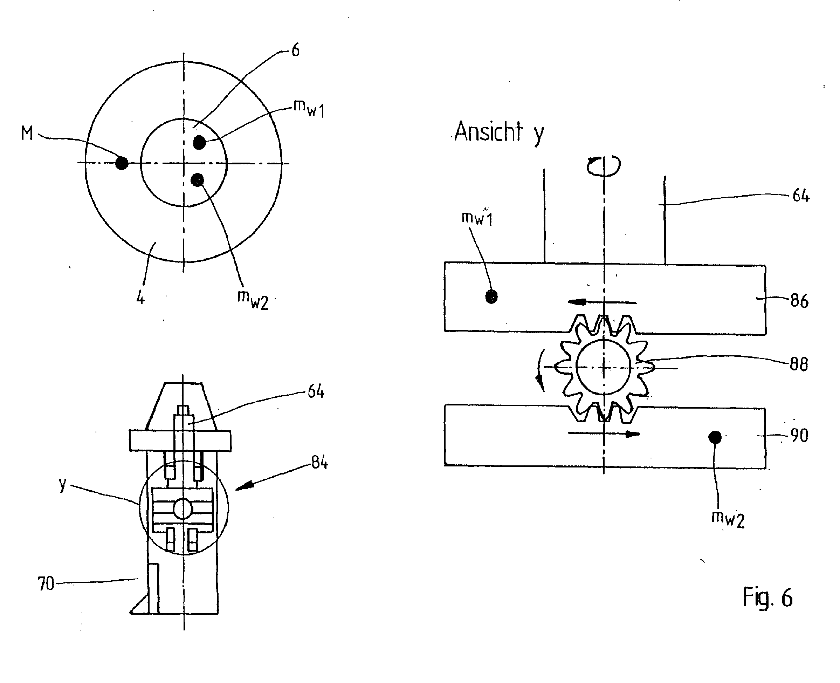

In Figur 6 unten links ist eine Variante eines Werkzeugs 70 dargestellt, bei dem die Innenspindel 6 der Spindelanordnung 1 zum Wuchten des Werkzeuges 70 verwendet wird. Dieses hat eine integrierte Wuchteinrichtung 84, die von der an die Innenspindel 6 angekuppelten Betätigungswelle 64 antreibbar ist.

An der Betätigungswelle 64 ist ein Wuchtring 86 befestigt, der eine Unwucht aufweist. Der Wuchtring 86 kämmt mit einem Wuchtrad 88, das seinerseits mit einem weiteren, im Werkzeug 70 drehbar gelagerten Wuchtring 90 kämmt. D.h., eine Drehung des Wuchtrings 86 in die eine Drehrichtung wird über das Wuchtrad 88 in eine Drehung des Wuchtrings 90 in die andere Drehrichtung umgesetzt. Durch diese Relatiwerdrehung der beiden Wuchtringe 86, 90 lassen sich die beiden Unwuchten der Ringe in eine Relativposition zueinander bringen, in der eine Unwucht M der Außenspindel 4 kompensiert ist, so daß mit dem Werkzeug 70 eine hochpräzise Fertigung ermöglicht ist, wobei die Unwucht U während des Bearbeitungsvorganges mit hoher Dynamik minimal gehalten werden kann. Bei dem vorbeschriebenen Ausführungsbeispiel ist die Wuchteneinrichtung 84 in das Werkzeug 70 integriert. Dies hat den Vorteil, daß die Spindelanordnung 1 mit einem sehr kurzen Abstand zum Werkzeug 70 ausgeführt werden kann, da zum Wuchten keine verstellbaren Auswuchtmassen vor der vorderen Spindellagerung angebracht werden müssen.

Prinzipiell kann sowohl bei der konzentrischen Lösung als auch bei der exzentrischen Lösung die Bohrstange im Axialabstand zur Werkzeugschneide mit Meßdüsen ausgeführt sein. Die Zuführung der Meßluft erfolgt von innen über die Axialbohrung 31 der Innenspindel 6. Bei hochpräzisen Bearbeitungen wird dann zunächst ein Meß-Schnitt durchgeführt, die hinter der Werkzeugschneide angeordneten Meßdüsen in Meßposition gebracht und die Bohrung dann nach der Messung und einer eventuellen Kompensation durch Ansteuerung der Innenspindel 6 die Bohrung im Rückzug fertig bearbeitet werden. D.h. Bearbeitung und Messung erfolgen praktisch in einem Arbeitsgang, so daß die Hauptzeit verkürzt wird. Denkbar ist es auch, einen Meßtaster nahe der Kompensationsspindel vorzusehen. Dieser macht alle Achsbewegungen der Spindelanordnung 1 mit und bedarf deshalb zum Messen keiner eigenen Achsen. Zur Vermeidung von Störkanten mit dem zu bearbeitenden Werkstück und zur Vermeidung von Störungen durch Kühlmittel- und Späneanfall kann der Meßtaster durch einen geeigneten Antrieb, bspw. Hydraulikzylinder zugefahren werden.

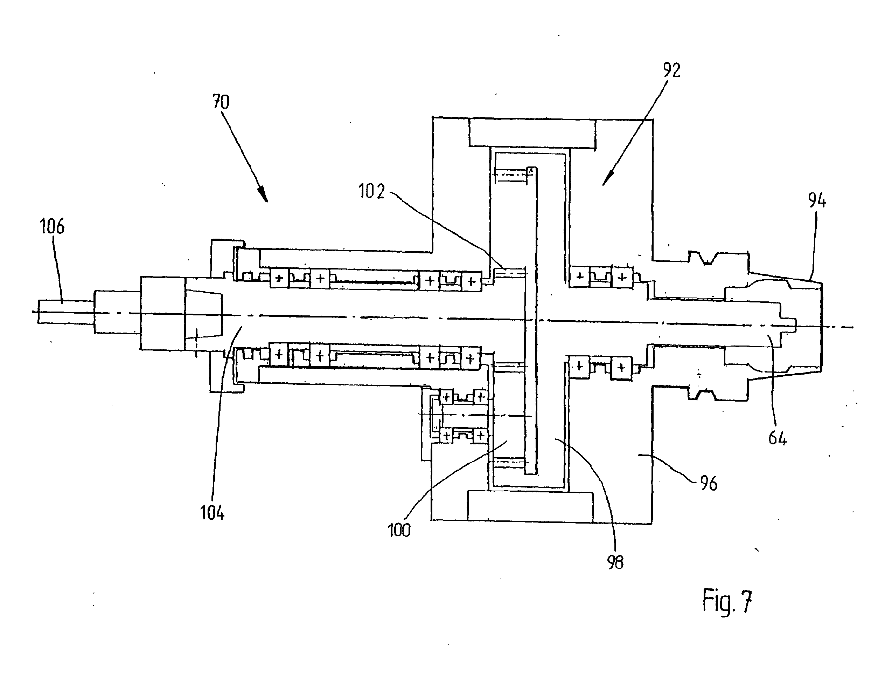

Figur 7 zeigt ein Werkzeug 70 mit integriertem Getriebe 92, über das die Drehzahlen von Innen- und Au-βenspindel 6, 4 nochmals variierbar sind. Das in Figur 7 dargestellte Werkzeug wird bspw. mit einem Steilkegel 94 in die Kegelaufnahme 36 der Außenspindel 4 eingesetzt. Ein Gehäuse 96 des Getriebes 92 ist drehfest mit dem Steilkegel 94 verbunden. Die an die Innenspindel 6 ankoppelbare Betätigungswelle 64 ist im Inneren des Gehäuses 96 drehbar gelagert und treibt ein Hohlrad 98 an. Das Hohlrad kämmt mit einem Planetenrad 100, das drehbar im Gehäuse 96 gelagert ist. Das Planetenrad 100 kämmt seinerseits mit einem Innenrad 102, das drehfest an einer drehbaren im Gehäuse 96 gelagerten Ausgangswelle 104 befestigt ist. Diese Ausgangswelle 104 trägt eine Bohrstange 106 des Werkzeugs 70. Mit einem derartigen Getriebe wird die Drehzahl der Bohrstange 106 durch geeignete Ansteuerung der Innenspindel 6 und der Außenspindel 4 in einem großen Drehzahlbereich variieren. So kann bspw. einer der beiden Antriebsmotoren 20, 22 stillgesetzt werden oder unter Ausnutzung der maximalen relativen Drehzahl der beiden Spindeln 4, 6, d.h. also Linkslauf der einen Spindel und Rechtslauf der anderen Spindel, eine Überlagerung der beiden Drehzahlen einschließlich der zusätzlichen Übersetzung des Getriebes 92 erreicht werden. Selbstverständlich können auch andere Getriebekonstruktionen als das dargestellte Getriebe 92 mit Hohlrad 98, Planetenrad 100 und Innenrad 102 eingesetzt werden.

Bei den vorbeschriebenen Ausführungsbeispielen laufen Innenspindel 6 und Außenspindel 4 konzentrisch zueinander. Diese Variante hat den Vorteil, daß die Unwucht der Spindelanordnung 1 sehr gering ist. Falls diese Spindelanordnung 1 als Kompensationsspindel verwendet werden soll, muß die Exzentrizität über das Werkzeug 70 (siehe Figur 5 oben) eingebracht werden. Prinzipiell können sowohl orientierte (HSK-A) als auch nicht orientierte Werkzeuge (HSK-E) in die Spindelanordnung 1 eingewechselt werden. Bei nicht orientierten Werkzeugen kann dieses mit einem Anschlag versehen werden, der durch die Werkzeugmaschinensteuerung erkannt und als Nullpunkt für die Werkzeugschneide 74 übernommen werden kann.

Figur 8 zeigt eine Lösung eines derartigen Kompensationswerkzeuges 70, bei dem die Exzentrizität über das Werkzeug eingebracht wird, wobei dieses mit einer Nullpunktjustierung versehen ist. In Figur 8 ist ein derartiges Ausführungsbeispiel eines Werkzeugs 70 mit Drehanschlag ausgeführt. Das Werkzeug hat einen Schaft 132 mit Kegelschaft (Steilkegel) 94 und trägt einen Biegeklemmhalter 72 mit einer Werkzeugschneide 74. Der Kegelschaft ist in die Aussenspindel 4 eingesetzt, so dass sich die Werkzeugschneide 74 mit der Drehzahl der Aussenspindel 4 dreht.

In einer inneren Axialbohrung des Werkzeugs 70 ist die Betätigungswelle 64 gelagert, die - beispielsweise über die in Figur 3 dargestellte Verzahnung - mit der Innenspindel in Dreheingriff steht. Bei dem in Figur 8 dargestellten Ausführungsbeispiel erfolgt die Lagerung der Betätigungswelle 64 über Schrägwälzlager 130, die in der Axialbohrung des Schaftes 132 aufgenommen sind.

Am Aussenumfang der Betätigungswelle 64 oder an einem auf diese aufgesetzten Einsatzteil ist eine Steuerfläche 134 ausgebildet, auf der ein Radialstift 136 abgestützt ist, der den Biegeklemmhalter 72 in Radialrichtung beaufschlagt. Durch Relativverdrehung der Steuerfläche 134 mit Bezug zum Schaft 132 kann die Radialposition des Radialstifts 136 und damit die Zustellbewegung des Biegeklemmhalters 72 gesteuert werden.

Im Abstand zu der Steuerfläche 134 ist am Aussenumfang eine Umfangsnut 138 ausgebildet, die den Aussenumfang der Betätigungswelle 64 nicht vollständig, sondern beispielsweise in einem Winkel von 340° umgreift, so dass eine stirnseitige Anschlagfläche geschaffen wird.

In den Schaft 132 ist ein Anschlagstift 140 eingesetzt, der mit seinem Endabschnitt in die Umfangsnut 138 eintaucht. Beim Einsetzen des Werkzeuges 70 wird die Relativposition zwischen Schaft 132 und Betätigungswelle 64 mit vorbestimmter Drehrichtung solange geändert, bis der Anschlagstift 140 an die Nut in Umfangsrichtung begrenzende Stirnfläche anschlägt - die Nulllage der Werkzeugschneide 74 ist so exakt positioniert. Bei dieser Variante ist die Relativbewegung, d. h. die Zustellbewegung der Werkzeugschneide 74 durch den Umgriffswinkel der Nut begrenzt.

Bei dem vorbeschriebenen Ausführungsbeispiel erfolgt die Referenzierung durch einen radialen Anschlag zur Begrenzung des Drehwinkels zwischen Schaft 132 und Betätigungswelle 64. Alternativ kann die Zustellbewegung auch über eine Kugelgewinde-Spindel oder ähnliches erfolgen, bei der die Spindel dreht und die Mutter eine Axialbewegung durchführt. Die Referenzierung zur Einstellung der Relativdrehposition kann auch durch Auflaufen der Mutter auf einen Axialanschlag erfolgen.

Für den Fall, daß die in Figur 5 dargestellten Werkzeugkonstruktionen zu komplex aufgebaut sind, kann die Spindelanordnung 1 auch mit einer exzentrisch in der Außenspindel 4 gelagerten Innenspindel 6 ausgeführt sein. Diese Art der Spindelanordnung 1 macht komplex aufgebaute Einwechselköpfe überflüssig, so daß auf Standardwerkzeuge zurückgegriffen werden kann. Nachteilig bei dieser Lösung ist, daß die Schnittkraft über die Innenspindel 6 aufgebracht werden muß, so daß deren Antriebsmotor 22 größer als beim vorbeschriebenen Ausführungsbeispiel zu wählen ist.

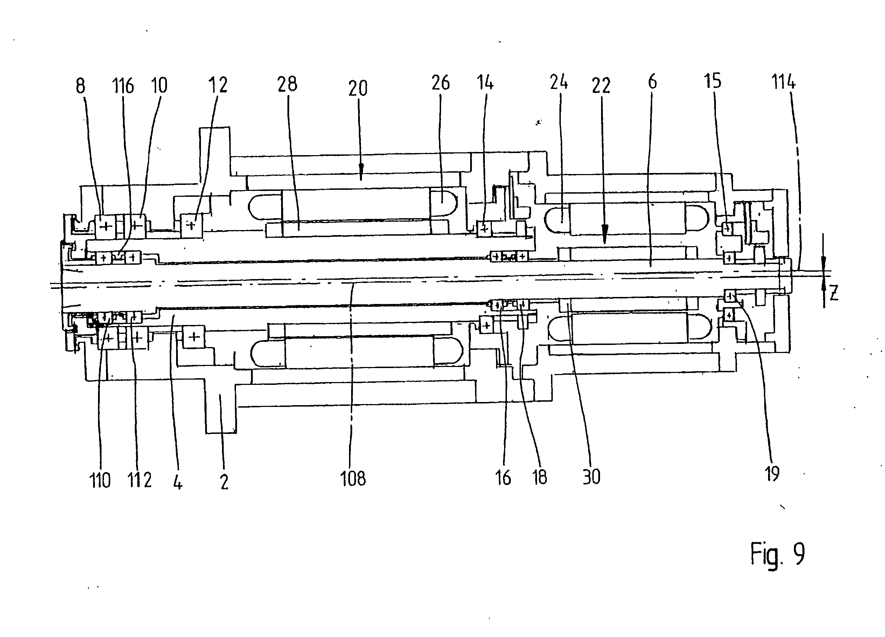

In Figur 9 ist eine Spindelanordnung 1 mit exzentrischer Innenspindel 6 dargestellt. Ähnlich wie bei dem anhand von Figur 1 erläuterten Ausführungsbeispiel ist die Außenspindel 4 über Wälzlager 8, 10, 12, 14 und 15 im Spindelgehäuse 2 gelagert. Die Drehachse der Außenspindel 4 ist in Figur 9 mit dem Bezugszeichen 108 versehen. Die Innenspindel 6 ist über Wälzlager 16, 18, 19, 110 und 112 in der Außenspindel 4 gelagert. Die Drehachse 108 der Innenspindel 6 ist um das Maß Z gegenüber der Drehachse 114 der Außenspindel 4 versetzt. Der Antrieb der Außenspindel 4 erfolgt durch den Antriebsmotor 20, dessen Stator 26 gehäusefest aufgenommen ist und dessen Rotor 28 drehfest mit der Außenspindel 4 verbunden ist. Der Stator 24 des Antriebsmotors 22 der Innenspindel 6 ist ebenfalls gehäusefest aufgenommen, während der Rotor 30 des Antriebsmotors 22 drehfest mit der Innenspindel 6 verbunden ist - d.h. der Rotor 30 ist um das Maß Z exzentrisch zum Stator 24 ausgebildet. Bei derartigen Konstruktionen wird keine zusätzliche Kupplung zwischen Antrieb und Spindel benötigt, so dass die Einheit axial sehr kurz baut. Diese Konstruktion ist bei kleineren Exzentrizitätsmaßen Z realisierbar. Bei größeren Exzentern erfolgt der Antrieb über Getriebe, bspw. Kegelradgetriebe oder spezielle Ausgleichskupplungen, die auch die zentrale Kühlmittelversorgung tragen.

Nachteil dieser exzentrischen Lösung ist allerdings die größere Unwucht, so daß ein erhöhter Aufwand zum Auswuchten der Anordnung erforderlich sein kann.

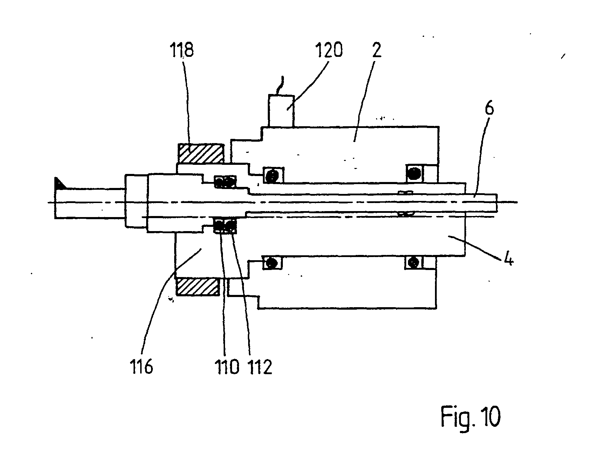

Figur 10 zeigt ein Grundprinzip, nach dem ein derartiges Wuchten der Kompensationsspindel durchgeführt werden kann. Es sei angenommen, daß die Innen- und Außenspindel 4, 6 sowie das Werkzeug 70 nicht gewuchtet sind. Auf die Außenspindelnase 116 kann eine Wuchteinrichtung 118 aufgesetzt werden, wobei diese vor dem vorderen Spindellager, d.h. den Wälzlagern 110, 112, angeordnet ist. Auf das Spindelgehäuse 2 wird ein Beschleunigungsaufnehmer 120 aufgesetzt, so daß durch die Unwucht entstehende Beschleunigungen erfaßbar sind. Der größere Durchmesser der Außenspindel 4 kommt dabei der benötigten Wuchtkapazität entgegen. Bei einem nicht vorgewuchteten Werkzeug 70 kann die Wuchtung in jeder beliebigen Winkellage der Innenspindel 6 erfolgen. Bei einem dynamischen Verstellvorgang kann die Wuchteinrichtung 118 die Veränderung der Unwuchtgröße und -lage nicht schnell genug ausgleichen, so daß es erforderlich werden kann, das Werkzeug 70 vorher zu wuchten. Ein Nachteil dieser Lösung besteht darin, daß die Außenspindelnase 116 einen erheblichen axialen Bauraum erfordert.

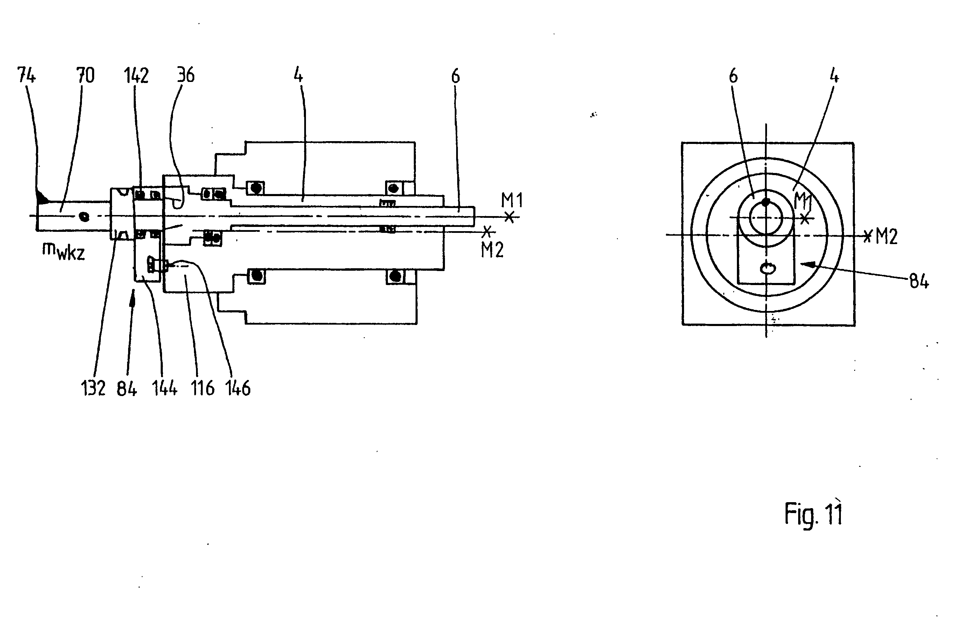

Bei dem vorbeschriebenen Ausführungsbeispiel ist die Wuchteinrichtung 118 spindelseitig angeordnet. Figur 11 zeigt eine Variante, bei der die Wuchteinrichtung werkzeugseitig angeordnet ist.

Ähnlich wie bei der in Figur 9 dargestellten Lösung ist die Innenspindel 6 exzentrisch in der Aussenspindel 4 eingelagert. Das Werkzeug 70 wird in die Kegelaufnahme 36 eingesetzt, die bei exzentrischen Spindelanordnungen an der Innenspindel 6 angeordnet ist. Die Spindelanordnung hat aufgrund der exzentrischen Anordnung der Innenspindel 6 eine nicht unerhebliche Unwucht. Das Werkzeug 70 ist mit einer Wuchteinrichtung 84 versehen. Diese Wuchteinrichtung 84 ist über eine Lagerung 142 auf dem Aussenumfang des Schaftes 132 des Werkzeugs 70 gelagert. Gemäß Figur 11 sitzt die Wuchteinrichtung 84 in Axialrichtung vor der Aussenspindelnase 116. Die Wuchteinrichtung 118 trägt ein Ausgleichsgewicht 144, das über eine Fixierung 146 drehfest mit der Aussenspindel - im dargestellten Fall mit der Stirnfläche der Aussenspindelnase 116 verbunden ist. D. h., das Ausgleichsgewicht 144 dreht gemeinsam mit der Aussenspindel 4 und ist so gewählt, dass die Unwuchtmasse des Werkzeuges und der Innenspindel ausgeglichen ist.

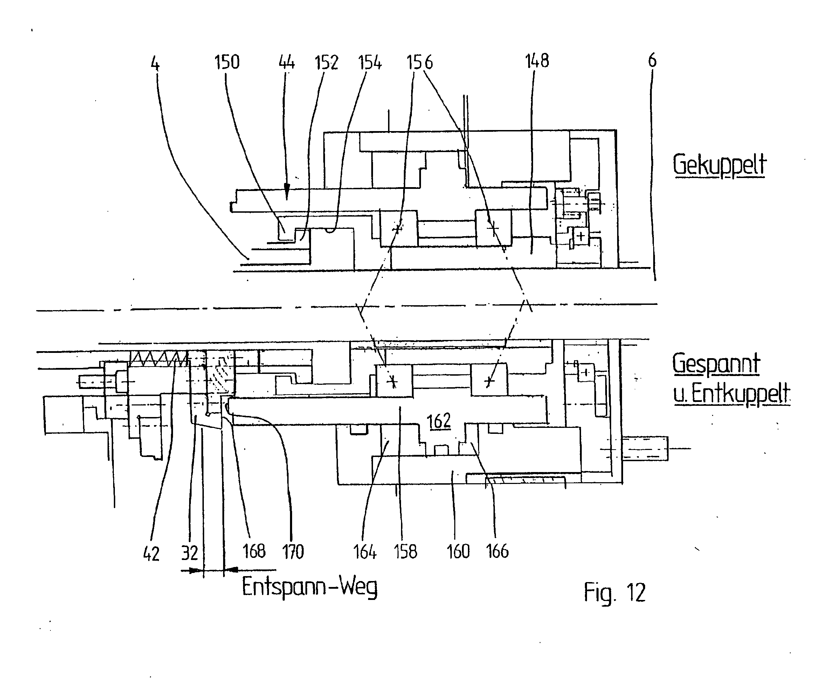

Figur 12 zeigt schließlich Funktionsstellungen eines Ausführungsbeispiels, bei dem die Betätigung der Zugstange 32 und der Kupplung 44 über ein gemeinsames Betätigungselement erfolgt, so dass die Einheit sehr kompakt aufgebaut ist. Bei der in Figur 12 dargestellten Lösung ist auf der Innenspindel 6 eine in Axialrichtung verschiebbare Schiebehülse 148 geführt, die über eine Passfeder drehfest mit der Innenspindel 6 verbunden ist. An dem in Figur 12 linken Endabschnitt der Schiebehülse 148 ist eine Innenreibfläche 150 ausgebildet, die in Eingriff bringbar ist mit einer entsprechend ausgebildeten Aussenreibfläche 152 der Aussenspindel 4. Bei dem dargestellten Ausführungsbeispiel ist die Aussenreibfläche 152 an einem Radialbund ausgeführt, der in eine Aufnahme 154 der Schiebehülse 148 eintaucht.

Die Schiebehülse 148 trägt an ihrem Aussenumfang zwei Lager 156, auf denen ein Kolben 158 gelagert ist. Dieser Kolben ist drehfest in einem Zylindergehäuse 160 aufgenommen. Ein umlaufender Ringbund 162 des Kolbens 158 und das Zylindergehäuse 160 bilden zwei Zylinderräume 164 und 166 aus, die durch den Ringbund 162 stirnseitig voneinander getrennt sind.

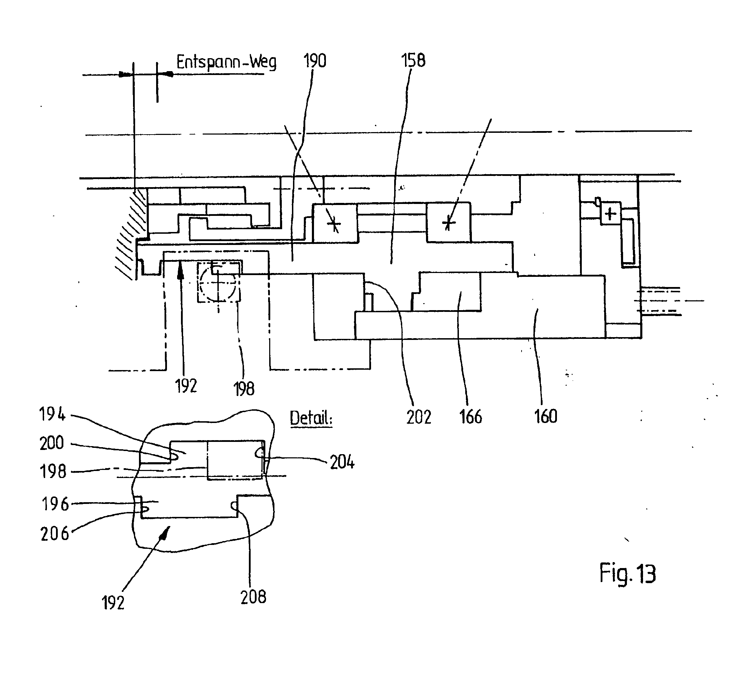

Das Zylindergehäuse 160 ist axial verschiebbar im Spindelgehäuse 2 gelagert und wird über zumindest eine Feder 174 in Axialrichtung weg von einer Schulter des Spindelgehäuses vorgespannt. Eine Passfeder 175 verhindert eine Verdrehung des Zylindergehäuses 160. Am Zylindergehäuse 160 ist des weiteren eine Federplatte 176 über mehrere Bolzen 178 und Spannfedern 180 gelagert. Über diese Spannfedern 180 wird die Federplatte gegen ein Kupplungslager 182 vorgespannt, das auf einem Druckring 184 gelagert ist. Dieser umgreift die Innenspindel 6 und ist in Anlage an die benachbarte Stirnfläche 186 der Schiebehülse 148 bringbar. Die Figuren 12 und 13 zeigen die Spindelanordnung in den Betriebszuständen "Gekuppelt", "Entkuppelt", Werkzeug "Gespannt" und "Entspannt". Diese vier Betriebszustände lassen sich durch Zusammenwirken des Kolbens 158 und eines anhand von Figur 13 beschriebenen Schaltstückes 188 einstellen.

Der Kolben 158 hat ein sich zur Zugstange 32 hin erstreckendes Kolbenhemd 190, in dem eine sich in der Darstellung gemäß Figur 13 nach unten hin öffnende Steuernut 192 ausgebildet ist. Diese Steuernut ist in Figur 13 unten als Detail dargestellt. Demgemäß hat diese in der Ansicht von unten zwei in Axialrichtung versetzt zueinander angeordnete Nutabschnitte, wobei der in Figur 13 obenliegende Nutabschnitt - im folgenden Spannnut 194 genannt die Werkzeugspannung steuert, während ein untenliegender Nutabschnitt - im folgenden Kupplungsnut 196 genannt - die Kupplung zwischen Innen- und Aussenspindel 6, 4 steuert. Durch diese Nuten 194, 196 wird die Axialbewegung des Kolbens 158 begrenzt. Welche der genannten Nuten 194, 196 wirksam ist wird über ein in Figur 13 strichpunktiert angedeutetes Steuerstück bestimmt, das mittels eines Hubmagenten derart innerhalb der Steuernut 192 verschiebbar ist, dass es wahlweise mit der Spannnut 194 oder der Kupplungsnut 196 in Überdeckung bringbar ist. Hierzu wird das Steuerstück 198 mittels des Hubmagneten in der Darstellung gemäß Figur 13 oben senkrecht zur Zeichenebene verschoben.

Beide Zylinderräume 164, 166 sind mit Druckmittel beaufschlagbar, um eine Axialverschiebung des Kolbens 158 bzw. des Zylindergehäuses 160 zu bewirken.

Wie aus der Darstellung in Figur 12 unten hervorgeht, ist ein Schiebeanschlag 168 der Zugstange 82 in einer in Figur 12 unten dargestellten Position im Abstand zu einer Betätigungsfläche 170 des Kolbens 158 angeordnet. In dieser Position ist die Zugstange 32 über die Spannfedern 42 vorgespannt, so dass das Werkzeug gespannt ist. Wie des weiteren aus Figur 12 unten hervorgeht, stehen die Innenreibfläche 150 und die Aussenreibfläche 152 sowie die Stirnfläche 186 und der Druckring 186 im Axialabstand zueinander, so dass die Kupplung gelöst ist und keine Drehverbindung zwischen Innenspindel 6 und Aussenspindel 4 vorliegt.

In diesem Betriebszustand "Gespannt" ist der in Figur 12 linke Zylinderraum 164 mit Druckmittel beaufschlagt und das Steuerstück 198 befindet sich in der Spannnut 194. Der Kolben 158 ist durch den Druck im Zylinderraum 164 nach rechts beaufschlagt, während das Zylindergehäuse 160 durch die Kraft der Feder 174 nach links beaufschlagt wird. Bei der resultierenden Axialverschiebung des Kolbens 158 läuft eine Anlageflanke 200 der Spannnut 194 auf das Steuerstück 198 auf, so dass der Kolben 158 in der in Figur 12 unten dargestellten Position verbleibt - das Werkzeug ist gespannt, die Spindeln 4, 6 entkuppelt.

Zum Entspannen des Werkzeuges wird gemäß Figur 13 der Zylinderraum 166 mit Druckmittel beaufschlagt, so dass dieser aus der Position gemäß Figur 12 nach links bewegt wird und auf einen Gehäuseanschlag 202 des Zylindergehäuses 160 aufläuft. In dieser Position befindet sich das Steuerstück 198 in einem geringen Abstand zu einer rückwärtigen Flanke 204 der Spannnut 194. Durch die Axialverschiebung des Kolbens 158 nach links läuft die Betätigungsfläche 170 auf die Zugstange 32 auf, so dass diese um den Entspann-Weg nach links verschoben wird - das Werkzeug ist entspannt, die Innenspindel 6 und die Aussenspindel 4 sind entkuppelt.

Soll nun ausgehend von der Grundposition in Figur 12 unten (Werkzeug gespannt, Spindeln entkuppelt) zur Erhöhung der Schnittkraft oder zum schnelleren Beschleunigen oder Abbremsen der schwächer motorisierten Spindel die Innenspindel 6 und die Aussenspindel 4 gekoppelt werden, so wird der Zylinderraum 164 mit Druckmittel beaufschlagt, so dass der Kolben 158 gemäß der Darstellung in Figur 12 oben nach rechts bewegt wird. Dadurch wird die mit der Innenspindel 6 drehfest verbundene Schiebehülse 148 ebenfalls nach rechts verschoben, so dass ein Reibschluss zwischen den Reibflächen 150, 152 hergestellt wird. Aufgrund der Axialverschiebung der Schiebehülse 148 und der Bewegung des Zylindergehäuses 160 nach rechts läuft der Druckring 184 auf die Stirnfläche 186 der Schiebehülse 148 auf. Die über die Bolzen 178 und die Spannfedern 180 am Zylindergehäuse gelagerte Federplatte 176 erzeugt über das in Axialrichtung auf dem Druckring 184 festgelegte Kupplungslager 182 eine Kraft, die proportional zu dem übertragbaren Kupplungsmoment ist. Durch dieses Kupplungslager 182 und die Lager 156 sind die sich drehenden Bauelemente Schiebehülse 148 und Reibring 184 von den drehfest gelagerten Bauelementen Kolben 158, Zylindergehäuse 160 und Federplatte 176 kinematisch getrennt. Beim Kuppeln wird das Steuerstück 198 über den Hubmagneten in eine Position gefahren, in der es in die Kupplungsnut 196 (nach unten in Figur 13) eintaucht. Im gekuppelten Zustand liegt das Steuerstück 198 an einer Kupplungsflanke 206 an oder steht in geringem Abstand hierzu.

Zum Entkuppeln (Figur 12 unten) wird der rechte Zylinderraum 166 mit Druckmittel beaufschlagt, so dass der Kolben 158 aus der in Figur 12 oben dargestellten Position nach links gefahren wird und mit einer Kupplungsflanke 208 auf das Schaltstück 198 aufläuft. Das Zylindergehäuse 160 bewegt sich mit dem Druckbring 184 nach rechts, so dass der Kraftschluss zwischen den Reibflächen 150, 152 und der Kontakt zwischen den Druckring 184 und der Stirnfläche 186 aufgehoben wird - die Spindeln 4, 6 sind entkuppelt, das Werkzeug ist gespannt.

Im gekoppelten Zustand der beiden Spindeln 4, 6 wird die Spindelanordnung durch den starken Antriebsmotor 20 der Aussenspindel 4 mitgeschleppt wird. Bei gekuppelter Aussen- und Innenspindel sind zwei Betriebszustände vorstellbar. Einmal kann die stärker motorisierte Spindel zum Beschleunigen und Abbremsen der schwächer motorisierten Spindel verwendet werden, so dass die Hochlauf- und Abbremszeit verringert werden kann. Zum anderen kann die verfügbare Leistung an der Werkzeugschneide durch das Fahren im Master-Slave-Betrieb vergrössert werden.

Das Werkzeug ist weiter gespannt, da der Axialabstand zu dem Schiebeanschlag 168 in der Betätigungsfläche 170 durch die Axialverschiebung des Kolbens 158 vergrößert ist.

Wie in Figur 12 oben dargestellt, kann in der rechten Endposition des Kolbens 158 ("Gekuppelt") ein Spiel "s" zwischen der Stirnfläche des Kolbens 158 und der benachbarten Gehäusewand ausgebildet sein. Dies kann ausgenützt werden, um über den Kolben 158 und gegebenenfalls die Schiebehülse 148 eine Vorspannung der Spindellagerung einzustellen. Die Lager 156 bilden praktisch ein Loslager der Spindelanordnung das in Axialrichtung verschiebbar ist. Durch Variation des Druckes im Zylinderraum 164 lässt sich bei vorhandenem Spiel s die Vorspannung der Spindellagerung einstellen. D. h., durch Vorsehen eines über die Maschinensteuerung ansteuerbaren Proportionalventil kann der Druck im Zylinderraum 164 variiert und somit die Vorspannung der Spindellagerung an unterschiedliche Betriebszustände angepasst werden. Für den Fall, dass eine derartige Variante nicht gewünscht ist, kann auf das Spiel s auch verzichtet werden, so dass der Kolben 158 in seiner rechten Endposition auf das Zylindergehäuse 160 aufläuft.

Offenbart ist eine Spindelanordnung mit einer Außenspindel und einer konzentrisch dazu oder exzentrisch dazu gelagerten Innenspindel. Beiden Spindeln ist ein eigener Antrieb zugeordnet, so daß bspw. eine Kompensation durch Einstellung einer Drehzahldifferenz zwischen Innen- und Außenspindel möglich ist. Die Antriebsleistung läßt sich optimieren, wenn die Innen- und Außenspindel mittels einer Kupplung drehfest miteinander verbindbar sind. Dadurch können beide Antriebsmotoren in optimaler Weise an die jeweiligen Aufgabenstellungen (Zustellung, Übertragung von Schneidkraft) angepaßt werden. Der kleinere Antriebsmotor für die Zustellbewegung kann mit einer vergleichsweise großen Übersetzung versehen werden.

### Bezugszeichenliste:

- 1: Spindelanordnung
- 2: Spindelgehäuse
- 4: Außenspindel
- 6: Innenspindel
- 8: Schrägkugellager
- 10: Schrägkugellager
- 12: Schrägkugellager
- 14: Schrägkugellager
- 15: Schrägkugellager
- 16: Wälzlager
- 18: Wälzlager
- 19: Wälzlager
- 20: Antriebsmotor (Außenspindel)
- 22: Antriebsmotor (Innenspindel)
- 24: Stator
- 26: Stator
- 28: Rotor
- 30: Rotor
- 31: Axialbohrung
- 32: Zugstange
- 34: Werkzeugspannvorrichtung
- 36: Kegelaufnahme
- 38: Spannzange
- 40: Spannelement
- 42: Spannfeder
- 44: Kupplung
- 46: Kupplungsflansch
- 48: Kupplungsring
- 50: Spannfeder
- 52: feststehender Kupplungsring
- 54: Stirnverzahnung
- 56: Stirnverzahlung
- 58: Elektromagnet
- 60: Werkzeugaufnahme
- 62: Verzahnung
- 64: Betätigungswelle
- 66: Verzahnung
- 68: HSK-Kühlmittelröhrchen
- 70: Werkzeug
- 72: Biegeklemmhalter
- 74: Werkzeugschneide
- 76: Exzenterwelle
- 78: Plandrehkopf
- 80: Dreh-Schwenkkopf
- 82: Werkzeugschneide
- 84: Wuchteinrichtung
- 86: Wuchtring
- 88: Wuchtrad
- 90: Wuchtring
- 92: Getriebe
- 94: Steilkegel
- 96: Gehäuse
- 98: Hohlrad
- 100: Planetenrad
- 102: Innenrad
- 104: Ausgangswelle
- 106: Bohrstange
- 108: Drehachse Außenspindel
- 110: Wälzlager
- 112: Wälzlager
- 114: Drehachse Innenspindel
- 116: Außenspindelnase
- 118: Wuchteinrichtung
- 120: Beschleunigungsaufnehmer
- 122: Zwischenbuchse
- 124: O-Ring
- 126: Dichteinrichtung
- 130: Schrägwälzlager
- 132: Schaft
- 134: Steuerfläche
- 136: Radialstift
- 138: Umfangsnut
- 140: Anschlagstift
- 142: Lagerung
- 144: Ausgleichsgewicht
- 146: Fixierung
- 148: Schiebehülse
- 150: Innenverzahnung
- 152: Außenverzahnung
- 154: Aufnahmeraum
- 156: Lager
- 158: Kolben
- 160: Zylindergehäuse
- 162: Ringbund
- 164: Zylinderraum
- 166: Zylinderraum
- 168: Schiebeanschlag
- 170: Betätigungsfläche
- 172: Passfeder
- 174: Feder
- 175: Passfeder
- 176: Federplatte
- 178: Bolzen
- 180: Spannfeder
- 182: Kupplungslager
- 184: Reibring
- 186: Stirnfläche
- 190: Kolbenhemd
- 192: Steuernut
- 194: Spannnut
- 196: Kupplungsnut
- 198: Steuerstück
- 200: Anlageflanke
- 202: Gehäuseanschlag
- 204: rückwärtige Flanke
- 206: Kupplungsflanke
- 208: Flanke

## Patentansprüche

1. Spindelanordnung für eine Werkzeugmaschine, mit einer Außenspindel (4) und einer darin geführten Innenspindel (6), wobei beiden Spindeln (4, 6) jeweils ein Antriebsmotor (20, 22) zur Drehung der jeweiligen Spindel (4; 6) zugeordnet ist, **gekennzeichnet durch** eine Kupplung (44), über die beide Spindeln (4, 6) miteinander drehfest verbindbar sind.

2. Spindelanordnung nach Patentanspruch 1, wobei eine der Spindeln (4, 6) mit einer Werkzeugspannvorrichtung (34) ausgebildet ist, und der dieser Spindel (4, 6) zugeordnete Antriebsmotor (20, 22) eine höhere Antriebsleistung als der Antriebsmotor (20, 22) der anderen Spindel (4, 6) hat.

3. Spindelanordnung nach Patentanspruch 2, wobei die Antriebsmotoren (20, 22) koaxial zu den Spindeln (4, 6) angeordnet sind.

4. Spindelanordnung nach einem der vorhergehenden Patentansprüche, wobei die Kupplung (44) eine Reibkupplung oder eine Zahnkupplung ist.

5. Spindelanordnung nach einem der vorhergehenden Patentansprüche, wobei die Werkzeugspannvorrichtung (34) in der Außenspindel (4) angeordnet ist und eine Zugstange (32) zum Betätigen einer Spannzange (38) der Werkzeugspannvorrichtung (34) von der als Hohlspindel ausgeführten Innenspindel (6) durchsetzt ist.

6. Spindelanordnung nach einem der vorhergehenden Patentansprüche, wobei die Innenspindel (6) koaxial zur Außenspindel (4) gelagert ist und stirnseitig ein Kupplungselement (62) hat, das in Eingriff mit einer Betätigungswelle (64) eines in der Werkzeugspannvorrichtung (34) gespannten Werkzeuges (70) ist.

7. Spindelanordnung nach Patentanspruch 6, wobei die Innenspindel (6) in Axialrichtung federnd in Richtung auf das Werkzeug (70) vorgespannt ist und eine Axialverschiebung der Innenspindel (6) über einen Aufnehmer erfaßbar ist.

8. Spindelanordnung nach Patentanspruch 6 oder 7, wobei die Betätigungswelle (64) eine Exzenterwelle (76) eines Kompensationswerkzeuges ist.

9. Spindelanordnung nach Patentanspruch 6 oder 7, wobei die Betätigungswelle (64) eine Wuchteinrichtung (84) des Werkzeugs (70) antreibt.

10. Spindelanordnung nach Patentanspruch 6 oder 7, wobei die Betätigungswelle (64) eine Getriebeeingangswelle eines ins Werkzeug (70) integrierten Getriebes (92) ist, über das die Drehzahl des Werkzeugs (70) in Abhängigkeit von der Drehzahl und Drehrichtung der Spindeln (4, 6) einstellbar ist.

11. Spindelanordnung nach einem der Patentansprüche 1, 2 oder 4, 5, wobei die Innenspindel (6) exzentrisch in der Außenspindel (4) gelagert ist und der Antriebsmotor (20) der Außenspindel (4) koaxial zum Stator (24) des Antriebsmotors (22) der Innenspindel (6) angeordnet ist, wobei der Rotor (30) auf der Innenspindel (6) gelagert ist.

12. Spindelanordnung nach einem der Patentansprüche 6 bis 11, wobei der Innenspindel (6) oder einem eingespannten Werkzeug (70) eine Wuchteinrichtung (118) zugeordnet ist.

13. Spindelanordnung nach einem der vorhergehenden Patentansprüche, wobei die Innenspindel (6) mit einer Axialbohrung (31) zur Zuführung von Kühlmittel, Blasluft oder Meßluft versehen ist.

14. Spindelanordnung nach einem der vorhergehenden Patentansprüche, wobei ein Entspannen eines Werkzeugs (70) mittels einer Zugstange (32) erfolgt, mit einer Betätigungseinrichtung (148,158), über die die Zugstange (32) und die Kupplung (44) betätigbar sind.

15. Spindelanordnung nach Patentanspruch 14, wobei die Betätigungseinrichtung einen Kolben (158) hat, durch dessen Axialverschiebung die Kupplung (44) und / oder die Werkzeugspannvorrichtung betätigbar ist.

16. Spindelanordnung nach Patentanspruch 15, wobei der Kolben (158) auf einer axial verschiebbar und drehfest mit einer Spindel (6) verbundenen Schiebehülse (148) gelagert ist, die in Kupplungseingriff mit einem entsprechenden Kupplungselement (152) der anderen Spindel (4) ist.

17. Spindelanordnung nach Patentanspruch 16, wobei der Kolben (158) eine Betätigungsfläche (170) hat, der ein Schiebeanschlag (168) der Zugstange (32) zugeordnet ist.

18. Spindelanordnung nach Patentanspruch 17, wobei der Kolben (158) zur variablen Einstellung eines Lagerspiels der Spindelanordnung vorgesehen ist.

19. Spindelanordnung nach Patentanspruch 18, wobei die Schiebehülse (148) über Lager (156) an dem Kolben (158)abgestützt ist, wobei die Lager (156) Loslager der Spindelanordnung bilden und durch Druckbeaufschlagung des Kolbens (158) das Lagerspiel einstellbar ist.

20. Spindelanordnung nach einem der Patentansprüche 15 bis 19, mit einer Steuereinrichtung, über die Axialendpositionen des Kolbens (158) zum Spannen und/oder Kuppeln veränderbar sind.

21. Spindelanordnung nach Patentanspruch 20, wobei die Steuereinrichtung ein Steuerstück (198) hat, das zur Begrenzung der Kolbenaxialbewegung innerhalb einer Steuernut (192) verschiebbar ist.

22. Spindelanordnung nach einem der Patentansprüche 15 bis 21, wobei der Kolben (158) in einem axial verschiebbaren Zylindergehäuse (160) geführt ist, das vorzugsweise über eine Feder (174) axial am Spindelgehäuse (2) abgestützt ist.

23. Spindelanordnung nach Patentanspruch 22, wobei das Zylindergehäuse (160) einen federvorgespannten Druckring (184) hat, der in Anlage an die Schiebehülse (148) bringbar ist.

24. Spindelanordnung nach einem der vorhergehenden Patentansprüche, mit einer Referenziereinrichtung (140), über die bei Einstellen einer Drehzahldifferenz zwischen Innen- und Aussenspindel eine Nulllagenpositionierung der Werkzeugschneide (74) durchführbar ist.

25. Spindelanordnung nach Patentanspruch 24, wobei die Referenziereinrichtung einen Drehanschlag mit einem Anschlagkörper hat, der mit einem Endabschnitt in eine Umfangsnut (138) des Werkzeugkopfes (94, 72) eintaucht.

## Claims

1. Spindle arrangement for a machine tool, comprising an outer spindle (4) and an inner spindle (6) guided therein, a drive motor (20, 22) being allocated to each of the two spindles (4, 6) for rotating the respective spindle (4; 6), **characterized by** a coupling (44) by means of which the two spindles (4, 6) can be connected to each other in a rotationally fixed manner.

2. Spindle arrangement in accordance with patent claim 1, wherein one of the spindles (4, 6) is constructed with a tool clamping device (34), and the drive motor (20, 22) allocated to this spindle (4, 6) has a higher driving power than the drive motor (20, 22) of the other spindle (4, 6).

3. Spindle arrangement in accordance with patent claim 2, wherein the drive motors (20, 22) are arranged coaxially with the spindles (4, 6).

4. Spindle arrangement in accordance with any one of the preceding patent claims, wherein the coupling (44) is a friction coupling or a toothed coupling.

5. Spindle arrangement in accordance with any one of the preceding patent claims, wherein the tool clamping device (34) is arranged in the outer spindle (4), and the inner spindle (6) which is configured as a hollow spindle passes through a pull rod (32) for actuating a collet (38) of the tool clamping device (34).

6. Spindle arrangement in accordance with any one of the preceding patent claims, wherein the inner spindle (6) is mounted coaxially with the outer spindle (4) and has at its end face a coupling element (62) which is in engagement with an actuation shaft (64) of a tool (70) clamped in the tool clamping device (34).

7. Spindle arrangement in accordance with patent claim 6, wherein the inner spindle (6) is resiliently biased in the axial direction in the direction towards the tool (70), and an axial displacement of the inner spindle (6) is detectable by a transducer.

8. Spindle arrangement in accordance with patent claim 6 or 7, wherein the actuation shaft (64) is an eccentric shaft (76) of a compensation tool.

9. Spindle arrangement in accordance with patent claim 6 or 7, wherein the actuation shaft (64) drives a balancing device (84) of the tool (70).

10. Spindle arrangement in accordance with patent claim 6 or 7, wherein the actuation shaft (64) is a gear input shaft of a gear unit (92) which is integrated into the tool (70) and by means of which the rotational speed of the tool (70) is adjustable in dependence upon the rotational speed and the direction of rotation of the spindles (4, 6).

11. Spindle arrangement in accordance with any one of patent claims 1, 2 or 4, 5, wherein the inner spindle (6) is mounted eccentrically in the outer spindle (4), and the drive motor (20) of the outer spindle (4) is arranged coaxially with the stator (24) of the drive motor (22) of the inner spindle (6), the rotor (30) being mounted on the inner spindle (6).

12. Spindle arrangement in accordance with any one of patent claims 6 to 11, wherein a balancing device (118) is allocated to the inner spindle (6) or to a clamped tool (70).

13. Spindle arrangement in accordance with any one of the preceding patent claims, wherein the inner spindle (6) is provided with an axial bore (31) for supplying coolant, blow air or measurement air.

14. Spindle arrangement in accordance with any one of the preceding patent claims, wherein a tool (70) is unclamped by means of a pull rod (32) with an actuating device (148, 158) by means of which the pull rod (32) and the coupling (44) are actuatable.

15. Spindle arrangement in accordance with patent claim 14, wherein the actuating device has a piston (158), by means of the axial displacement of which the coupling (44) and/or the tool clamping device is actuatable.

16. Spindle arrangement in accordance with patent claim 15, wherein the piston (158) is mounted on an axially displaceable slide sleeve (148) which is rotationally fixedly connected to a spindle (6) and is in coupling engagement with a corresponding coupling element (152) of the other spindle (4).

17. Spindle arrangement in accordance with patent claim 16, wherein the piston (158) has an actuation surface (170) with which a slide stop (168) of the pull rod (32) is associated.

18. Spindle arrangement in accordance with patent claim 17, wherein the piston (158) is provided for the variable adjustment of a bearing play of the spindle arrangement.

19. Spindle arrangement in accordance with patent claim 18, wherein the slide sleeve (148) is supported by means of bearings (156) on the piston (158), the bearings (156) forming loose bearings of the spindle arrangement, and the bearing play being adjustable by the piston (158) being acted upon by pressure.

20. Spindle arrangement in accordance with any one of patent claims 15 to 19, with a control device by means of which axial end positions of the piston (158) are alterable for clamping and/or coupling.

21. Spindle arrangement in accordance with patent claim 20, wherein the control device has a control member (198) which is displaceable in order to delimit the axial movement of the piston within a control groove (192).

22. Spindle arrangement in accordance with any one of patent claims 15 to 21, wherein the piston (158) is guided in an axially displaceable cylinder housing (160) which is preferably axially supported on the spindle housing (2) by a spring (174).

23. Spindle arrangement in accordance with patent claim 22, wherein the cylinder housing (160) has a spring-biased pressure ring (184) which can be brought into contact with the slide sleeve (148).

24. Spindle arrangement in accordance with any one of the preceding patent claims, with a referencing device (140) by means of which a positioning of the tool cutting edge (74) at zero position can be carried out when setting a rotational speed difference between inner spindle and outer spindle.

25. Spindle arrangement in accordance with patent claim 24, wherein the referencing device has a rotational stop with a stop body which with an end portion enters a circumferential groove (138) of the tool head (94, 72).

## Revendications

1. Broche pour une machine-outil, comportant une broche extérieure (4) et une broche intérieure (6) guidée dans celle-ci, dans laquelle un moteur d'entraînement (20, 22) est affecté à chacune des deux broches (4, 6) pour tourner la broche correspondante (4 ; 6), **caractérisée par** un dispositif d'accouplement (44) par l'intermédiaire duquel les deux broches (4, 6) peuvent être reliées l'une à l'autre de manière solidaire en rotation.

2. Broche selon la revendication 1, dans laquelle une des broches (4, 6) est réalisée avec un dispositif de fixation d'outil (34), et le moteur d'entraînement (20, 22) associé à cette broche (4, 6) a une puissance d'entraînement supérieure à celle du moteur d'entraînement (20, 22) de l'autre broche (4, 6).

3. Broche selon la revendication 2, dans laquelle les moteurs d'entraînement (20, 22) sont disposés de manière coaxiale par rapport aux broches (4, 6).

4. Broche selon l'une quelconque des revendications précédentes, dans laquelle le dispositif d'accouplement (44) est un accouplement à friction ou un accouplement à dents.

5. Broche selon l'une quelconque des revendications précédentes, dans laquelle le dispositif de fixation d'outil (34) est disposé dans la broche extérieure (4) et une barre de traction (32) permettant d'actionner une pince de serrage (38) du dispositif de fixation d'outil (34) est traversée par la broche intérieure (6) réalisée sous forme de broche creuse.

6. Broche selon l'une quelconque des revendications précédentes, dans laquelle la broche intérieure (6) est logée de manière coaxiale par rapport à la broche extérieure (4) et présente côté frontal un élément d'accouplement (62), qui est en prise avec un arbre d'actionnement (64) d'un outil (70) serré dans le dispositif de fixation d'outil (34).

7. Broche selon la revendication 6, dans laquelle la broche intérieure (6) est précontrainte dans le sens axial par ressort en direction de l'outil (70) et un déplacement axial de la broche intérieure (6) peut être détecté par le biais d'un capteur.

8. Broche selon la revendication 6 ou 7, dans laquelle l'arbre d'actionnement (64) est un arbre excentrique (76) d'un outil de compensation.

9. Broche selon la revendication 6 ou 7, dans laquelle l'arbre d'actionnement (64) entraîne un dispositif d'équilibrage (84) de l'outil (70).

10. Broche selon la revendication 6 ou 7, dans laquelle l'arbre d'actionnement (64) est un arbre d'entrée d'une transmission (92) intégrée dans l'outil (70), par le biais de laquelle la vitesse de rotation de l'outil (70) peut être réglée en fonction de la vitesse de rotation et du sens de rotation des broches (4, 6).

11. Broche selon l'une quelconque des revendications 1, 2 ou 4, 5, dans laquelle la broche intérieure (6) est logée de manière excentrique dans la broche extérieure (4) et le moteur d'entraînement (20) de la broche extérieure (4) est disposé de manière coaxiale par rapport au stator (24) du moteur d'entraînement (22) de la broche intérieure (6), le rotor (30) étant logé sur la broche intérieure (6).

12. Broche selon l'une quelconque des revendications 6 à 11, dans laquelle un dispositif d'équilibrage (118) est affecté à la broche intérieure (6) ou à un outil serré (70).

13. Broche selon l'une quelconque des revendications précédentes, dans laquelle la broche intérieure (6) est dotée d'un perçage axial (31) permettant d'amener un produit réfrigérant, de l'air de soufflage ou de l'air de mesure.

14. Broche selon l'une quelconque des revendications précédentes, dans laquelle un outil (70) est desserré à l'aide d'une barre de traction (32), avec un dispositif d'actionnement (148, 158), par le biais duquel la barre de traction (32) et le dispositif d'accouplement (44) peuvent être actionnés.

15. Broche selon la revendication 14, dans laquelle le dispositif d'actionnement comporte un piston (158), par le déplacement axial duquel le dispositif d'accouplement (44) et/ou le dispositif de fixation d'outil peut être actionné.

16. Broche selon la revendication 15, dans laquelle le piston (158) est logé sur un manchon coulissant (148) axialement mobile et relié de manière solidaire en rotation avec une broche (6), qui est en prise d'accouplement avec un élément d'accouplement (152) correspondant de l'autre broche (4).

17. Broche selon la revendication 16, dans laquelle le piston (158) comporte une surface d'actionnement (170) à laquelle est associée une butée coulissante (168) de la barre de traction (32).

18. Broche selon la revendication 17, dans laquelle le piston (158) est prévu pour le réglage variable d'un jeu de palier de la broche.

19. Broche selon la revendication 18, dans laquelle le manchon coulissant (148) est supporté au niveau du piston (158) par le biais de paliers (156), les paliers (156) formant des paliers libres de la broche et le jeu de palier pouvant être réglé par sollicitation en pression du piston (158).

20. Broche selon l'une quelconque des revendications 15 à 19, avec un dispositif de commande, par le biais duquel les positions finales axiales du piston (158) peuvent être modifiées pour le serrage et/ou l'accouplement.

21. Broche selon la revendication 20, dans laquelle le dispositif de commande présente un élément de commande (198), qui peut être déplacé pour limiter le déplacement axial du piston à l'intérieur d'une rainure de commande (192).

22. Broche selon l'une quelconque des revendications 15 à 21, dans laquelle le piston (158) est guidé dans un boîtier cylindrique (160) axialement mobile, qui est supporté axialement au niveau du boîtier de broche (2) de préférence par le biais d'un ressort (174).

23. Broche selon la revendication 22, dans laquelle le boîtier cylindrique (160) comporte un anneau de pression (184) précontraint par ressort, qui peut être amené en appui contre le manchon coulissant (148).

24. Broche selon l'une quelconque des revendications précédentes, avec un dispositif de référencement (140), par le biais duquel un positionnement en position zéro du tranchant de l'outil (74) peut être réalisé lors du réglage d'une différence de vitesse de rotation entre la broche intérieure et extérieure.

25. Broche selon la revendication 24, dans laquelle le dispositif de référencement comporte une butée rotative avec un corps de butée, lequel pénètre avec une section d'extrémité dans une rainure périphérique (138) de la tête d'outil (94, 72).
